# EUROPEAN PATENT SPECIFICATION

(11) **EP 4 329 116 B1**
(45) Date of publication and mention of the grant of the patent: **09.07.2025**
(21) Application number: 21942297.9
(22) Date of filing: 27.05.2021
(51) Int. Cl.: H01M 10/613, H01M 10/627, H01M 10/6563, H01M 50/204, H01M 50/251

(54) **ENERGY STORAGE CONTAINER**
ENERGIESPEICHERBEHÄLTER
RÉCIPIENT DE STOCKAGE D'ÉNERGIE

(43) Date of publication of application: 28.02.2024
(73) Proprietor: Huawei Digital Power Technologies Co., Ltd., Shenzhen, Guangdong 518043 (CN)
(72) Inventor: CHEN, Zhangrui, Shenzhen, Guangdong 518129 (CN); LI, Maofan, Shenzhen, Guangdong 518129 (CN); SU, Shuo, Shenzhen, Guangdong 518129 (CN)
(74) Representative: Gill Jennings & Every LLP
(86) International application number: PCT/CN2021/096214
(87) International publication number: WO 2022/246717

(56) References cited:
- WO-A1-2021/006626
- CN-A- 102 063 166
- CN-A- 109 742 273
- CN-A- 110 797 489
- CN-A- 111 697 287
- CN-A- 111 697 287
- CN-A- 112 803 099
- CN-U- 204 899 314
- CN-U- 211 017 322
- US-A- 5 610 802

## Description

### TECHNICAL FIELD

This application relates to the field of energy storage device manufacturing technologies, and in particular, to an energy storage container.

### BACKGROUND

With increasing development of new energy technologies worldwide, various technologies related to energy storage have been widely applied, and containers are widely used for energy storage. However, how to place more battery modules inside the energy storage container, improve space utilization of the energy storage container, and make the energy storage container more integrated becomes an urgent problem to be resolved.

CN111697287A provides a container type energy storage system. The container type energy storage system comprises a box body, a battery and management system, a power conversion system, a heat dissipation system and a control and monitoring system.

CN211017322U provides a mobile box type energy storage power station, comprising a box body, a battery device, a inverter and at least one group of heat dissipation systems.

CN109742273A provides a power battery cascade utilization container. A battery bin for placing retired battery modules, a control bin for placing an inverter cabinet and a control cabinet, a heat dissipation system, a fire extinguishing system and a lighting system are arranged inside the container.

WO2021/006626A1 provides a battery module which comprises: at least one battery cell; a module case for receiving the battery cell; a relay unit provided to the module case and electrically connected to the at least one battery cell; and a shunt unit provided on the outer side of the module case and electrically connected to the relay unit.

CN112803099A provides a cabinet type container for energy storage and an energy storage system.

### SUMMARY

This application provides an energy storage container to improve space utilization of a battery compartment, to improve energy storage effect. The energy storage container of the described invention is defined in independent claim 1 and its dependent claims.

An embodiment of this application provides an energy storage container, including a box body. The box body includes a function compartment and a battery compartment. The function compartment may include a power distribution room and a controller room, and the function compartment and the battery compartment are sequentially distributed in a length direction of the box body. In this arrangement manner, the function compartment and the battery compartment are provided at two ends of the box body. That is, the battery compartment may be a compartment body that is continuously distributed. When a battery rack for installing a battery pack is disposed in the battery compartment, space in the battery compartment may be fully utilized. A quantity of battery racks disposed in the battery compartment is increased, thus increasing a quantity of battery packs in the battery compartment, thereby further improving space utilization and integration of the energy storage container. In addition, the power distribution room and the controller room are separately provided, and are both provided at an end of the box body, so as to facilitate subsequent maintenance.

It should be noted that, to improve working safety of the energy storage container, a protective layer featuring a fireproof function and a heat preservation function may be provided between the battery compartment and the function compartment.

In a possible embodiment, the controller room and the power distribution room may be provided in a plurality of forms. For example, in a height direction of the box body, the controller room may be located above the power distribution room, and the controller room may be provided with an air outlet on a side wall in a width direction of the box body. The controller room may be provided with an air inlet on a side wall in the length direction of the box body. The air inlet and the air outlet form a heat dissipation channel. Air enters the controller room through the air inlet and is discharged to outside of the controller room through the air outlet, to perform ventilation and heat dissipation on a control device in the controller room.

The controller room may be provided with one or two air inlets on the side wall in the length direction of the box body. When there are two air inlets, the two air inlets may be respectively provided on two side walls of the controller room in the length direction of the box body.

It should be noted that, to improve working stability of the control device in the controller room, a protective apparatus may be provided at the air inlet. The protective apparatus is configured to prevent dust and rainwater from entering the controller room through the air inlet. In addition, in a specific implementation process, the protective apparatus may be provided at both the air inlet and the air outlet. The protective apparatus may be disposed to reduce a probability that the dust and the rainwater enter the controller room through the air inlet and the air outlet, thereby improving the working stability of the control device in the controller room, and further improving service life of the control device in the controller room.

In a possible embodiment, the controller room may further include a plurality of groups of mounting bracket assemblies, and two adjacent groups of the mounting bracket assemblies are disposed at intervals in the width direction of the box body. Each of the groups of the mounting bracket assemblies includes a plurality of mounting bracket assemblies disposed in a height direction of the box body. Each of the mounting bracket assemblies is configured to mount the control device, and the control device can be connected to the battery pack in the battery compartment, to control the battery pack in the battery compartment.

When each of the groups of the mounting bracket assemblies includes the plurality of mounting bracket assemblies disposed in the height direction of the box body, the mounting bracket assembly may include a fixed part and a sliding part. The fixed part is fastened to a side wall of the controller room facing a side of the battery compartment, and the fixed part may further include an extension part. The extension part extends away from the side wall of the controller room facing the side of the battery compartment, and the extension part may have a slide rail. An extension direction of the slide rail is the same as the length direction of the box body. The sliding part may include a slide groove that matches the slide rail. The control device may be connected to the slide groove, or a bearing part is provided on the slide groove, and the control device may be disposed on the bearing part. When the control device is specifically detected or operated, the control device may be directly pulled out from the mounting bracket assembly (similar to a drawer) at the air outlet, to improve convenience of operation or detection.

It should be noted that, the mounting bracket assembly in each of the groups of the mounting bracket assemblies may be distributed in a same manner as the battery pack in the battery compartment. In this way, when the control device mounted in each of the mounting bracket assemblies is connected to the battery pack corresponding to the control device, a length of a connection line is relatively short, thereby reducing the length of the connection line.

In a possible embodiment, in the height direction of the box body, when the controller room is located above the power distribution room, the controller room may include the plurality of mounting bracket assemblies, and the plurality of mounting bracket assemblies may be disposed at intervals in the width direction of the box body. In this case, the mounting bracket assembly includes the fixed part and the sliding part. The fixed part may include a mounting bracket. An end of the mounting bracket is fastened to the side wall of the controller room facing the side of the battery compartment. The mounting bracket extends toward a side away from the side wall, and the mounting bracket is provided with an accommodating cavity. The accommodating cavity may accommodate the sliding part. A bottom of the accommodating cavity is provided with the slide rail. The slide rail extends in the length direction of the box body and is perpendicular to the side wall of the controller room facing the side of the battery compartment. The sliding part includes the slide groove that matches the slide rail. The slide groove may be directly connected to the control device, or the bearing part is disposed on the slide groove, and the control device is disposed on the bearing part. In this manner, the control device is disposed in the height direction of the box body. When the control device is specifically detected or operated, because the control device may slide in the accommodating cavity of the mounting bracket, the control device may be directly pulled out from the mounting bracket assembly (similar to the drawer) at the air outlet, to improve the convenience of operating or detecting the control device.

In a possible embodiment, the power distribution room also needs to be provided with a heat dissipation apparatus, to enable a device in the power distribution room to work stably. Specifically, when the power distribution room is provided below the controller room, the power distribution room may be provided with a side-open door on the side wall in the width direction of the box body, and the heat dissipation apparatus may be disposed on the side-open door. The heat dissipation apparatus may be an air conditioner. There may be one or two side-open doors. In addition, when there are two side-open doors, one of the two side-open doors is provided with the heat dissipation apparatus, and the other of the two side-open doors may be provided with an observation window. When it is ensured that the device in the power distribution room can work stably, an interior of the power distribution room may be further observed through the observation window.

In a possible embodiment, the power distribution room and the controller room may also be provided in parallel in the width direction of the box body. The controller room is provided with the air outlet on the side wall in the width direction of the box body, the controller room is provided with the air inlet on the side wall in the length direction of the box body, and the air inlet and the air outlet form the heat dissipation channel. The power distribution room is provided with the side-open door on the side wall in the length direction of the box body, and the side-open door is provided with the heat dissipation apparatus. In this arrangement manner, the air outlet and the air inlet provided on the controller room may still form the heat dissipation channel, so that the air enters the controller room to dissipate heat for the control device disposed in the controller room. The side-open door of the power distribution room is provided on the side wall in the length direction of the box body, to avoid the air outlet.

When the power distribution room and the controller room are provided in parallel in the width direction of the box body, the plurality of mounting bracket assemblies disposed in the controller room may be disposed at intervals in the height direction of the box body, and each of the mounting bracket assemblies may include the fixed part and the sliding part. The fixed part may include slide rails disposed on the two side walls of the controller room in the length direction of the box body. The two slide rails are symmetrically arranged, and the slide rail extends in the width direction of the box body. The sliding part may include the slide groove disposed on the control device, and the slide groove can match the slide rail, so that the control device can slide in the width direction of the box body, so as to facilitate the operation or detection of the control device.

In the foregoing embodiment, the battery compartment may include a plurality of accommodating spaces used to accommodate the battery rack. The plurality of accommodating spaces may be provided at intervals in the length direction of the box body. In addition, in the length direction of the box body, every two adjacent accommodating spaces are communicated. Each of the accommodating spaces is provided with a side door on the side wall in the length direction of the box body. Specifically, in the width direction, two battery racks may be provided in each of the accommodating spaces, a bottom wall of each of the accommodating spaces is provided with the slide rail, and the slide groove that matches the slide rail is disposed below the battery rack. In this way, the battery rack can be conveniently installed in the accommodating space. When the battery rack in the accommodating space and the battery pack disposed on the battery rack need to be maintained, side doors on two sides of the accommodating space can be directly opened to maintain the battery rack in the accommodating space and the battery pack disposed on the battery rack. In this way, a technical person does not need to enter the battery compartment, and thus a channel for overhaul and maintenance may not be disposed in the battery compartment, thereby improving the space utilization inside the energy storage container and improving a capacity of energy storage.

### BRIEF DESCRIPTION OF DRAWINGS

FIG. 1 is a front view of an energy storage container according to an embodiment of this application;
FIG. 2 is a schematic diagram of a structure of an energy storage container according to an embodiment of this application;
FIG. 3 is still another schematic diagram of a structure of an energy storage container according to an embodiment of this application;
FIG. 4 is a side view of FIG. 3;
FIG. 5 is a schematic diagram of a structure of a protective apparatus disposed on a controller room in an energy storage container according to an embodiment of this application;
FIG. 6 is still another schematic diagram of a structure of an energy storage container according to an embodiment of this application;
FIG. 7 is still another schematic diagram of a structure of an energy storage container according to an embodiment of this application;
FIG. 8 is still another schematic diagram of a structure of an energy storage container according to an embodiment of this application; and
FIG. 9 is a schematic diagram of a structure of an accommodating space of a battery compartment in an energy storage container according to an embodiment of this application.

Reference numerals in the drawings:
10: battery compartment; 11: accommodating space; 12: side door; 20: function compartment; 21: controller room; 210: air inlet; 211: air outlet; 212: protective apparatus; 22: power distribution room; 220: side-open door; 221: observation window; 30: mounting bracket assembly; 40: control device; and 50: heat dissipation apparatus.

### DESCRIPTION OF EMBODIMENTS

The following describes in detail embodiments of this application with reference to accompanying drawings.

Terms used in the following embodiments are merely intended to describe specific embodiments, but are not intended to limit this application. The terms "one", "a", "the", "the foregoing", "such a", and "this" of singular forms used in this specification and the appended claims of this application are also intended to include expressions such as "one or more", unless otherwise specified in the context clearly.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have" and their variants mean "including but not limited to" unless otherwise specifically emphasized in another manner.

With rapid development of an energy storage device, an energy storage container is used in an increasingly wide range. The energy storage container is a highly integrated energy storage apparatus, a plurality of energy storage battery packs are placed in the energy storage container, and the energy storage container is connected to an external device through a few interfaces. The energy storage container features high integration, a small footprint, and good expansibility. The energy storage container is an important part for development of distributed energy, a smart grid, and energy internet in an energy storage system. However, in the conventional technology, some functional zones of the energy storage container are disposed in the middle of a box body. Space for placing the energy storage battery pack is separated, which may cause a decrease in space utilization of the energy storage container.

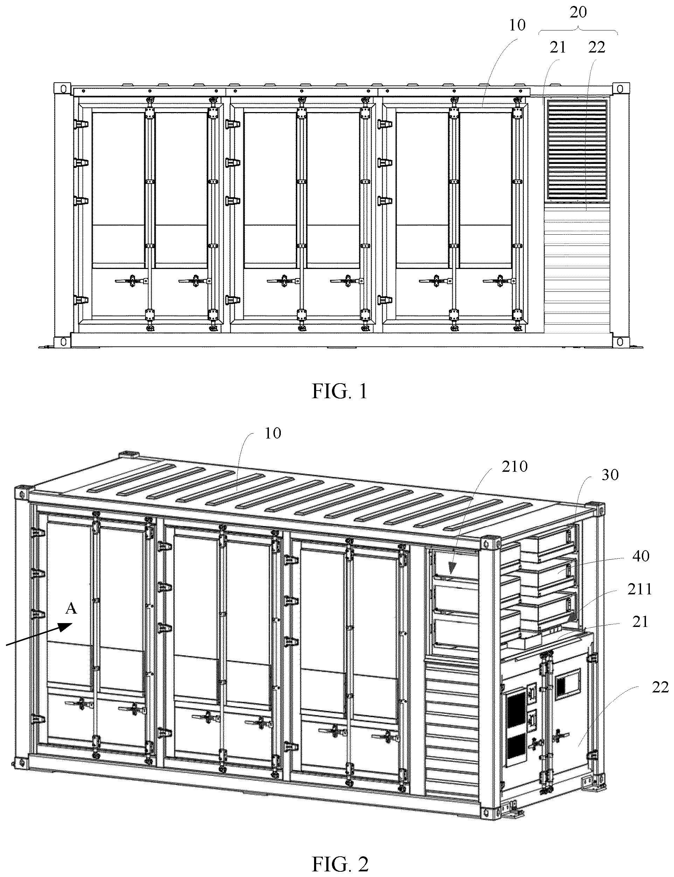

As shown in FIG. 1, an energy storage container provided in an embodiment of this application includes a box body. The box body includes a function compartment 20 and a battery compartment 10 that are sequentially distributed in a length direction of the box body. The function compartment 20 includes a power distribution room 22 and a controller room 21. In this arrangement manner, the function compartment 20 and the battery compartment 10 are disposed at two ends of the box body, and the battery compartment 10 is a continuous and uninterrupted compartment. When a battery rack is disposed in the battery compartment 10, space in the battery compartment 10 can be fully used, which enables the battery rack to be properly distributed in the battery compartment 10, increases a quantity of battery racks in the battery compartment 10, and enables the battery compartment 10 to install more battery packs, to improve space utilization and integration of the energy storage container. In addition, the power distribution room 22 and the controller room 21 are provided at a same end of the box body, and the power distribution room 22 and the controller room 21 are separately provided, to facilitate subsequent maintenance.

It should be noted that, to improve strength of a side wall of the power distribution room 22 in the length direction of the box body, the side wall of the power distribution room 22 in the length direction of the box body can be prepared by using a corrugated plate.

In a possible embodiment, FIG. 2 is a three-dimensional diagram of a structure corresponding to the energy storage container in FIG. 1, and FIG. 1 is a plan view of the structure observed in a direction A in FIG. 2. It should be understood that, to show a specific structure of the controller room, structures at an air inlet 210 and an air outlet 211 are different. As shown in FIG. 2, the controller room 21 and the power distribution room 22 may be provided in a plurality of forms at the end of the box body. For example, in the function compartment and in a height direction of the box body, the controller room 21 can be provided above the power distribution room 22. An area of the controller room 21 and an area of the power distribution room 22 may be the same. That is, the function compartment is equally divided by the controller room 21 and the power distribution room 22. Alternatively, the area of the controller room 21 is greater than the area of the power distribution room 22. Alternatively, the area of the controller room 21 is less than the area of the power distribution room 22. This is not specifically limited herein. Regardless how the area of the controller room 21 and the area of the power distribution room 22 are allocated in the function compartment, the controller room 21 is provided with the air outlet 211 on a side wall in a width direction of the box body, and the controller room 21 is provided with the air inlet 210 on the side wall in the length direction of the box body. The air inlet 210 and the air outlet 211 cooperate to form a heat dissipation channel, and air can enter the controller room 21 through the air inlet 210. When the air in the controller room 21 passes through a control device 40 in the controller room 21, the air may take away heat generated by the control device 40, and is discharged from the air outlet 211, so that the control device 40 in the controller room 21 can work stably.

In a specific implementation process, a plurality of groups of mounting bracket assemblies 30 can be disposed in the controller room 21. Each of the groups of the mounting bracket assemblies 30 includes a plurality of mounting bracket assemblies 30 disposed in the height direction of the box body, and two adjacent groups of the mounting bracket assemblies 30 are disposed at intervals in the width direction of the box body. Each of the mounting bracket assemblies 30 is configured to mount the control device 40. Specifically, there may be two groups of the mounting bracket assemblies 30. The two groups of the mounting bracket assemblies 30 correspond to the battery packs disposed on the battery racks in the battery compartment 10. In the length direction of the box body, the control device 40 on each of the mounting bracket assemblies 30 can correspond to a battery on the battery rack, so that when the control device 40 is connected to the battery pack, a connection line can be directly connected to the control device 40 through a side wall of the battery compartment 10 facing the controller room 21, thereby reducing a length of the connection line, improving simplicity of the controller room 21, and facilitating operation.

Each of the groups of the mounting bracket assemblies 30 can include three mounting bracket assemblies 30 arranged at intervals in the height direction of the box body. Each of the mounting bracket assemblies 30 in the two groups of the mounting bracket assemblies is arranged in a one-to-one correspondence.

When each of the groups of the mounting bracket assemblies 30 includes the plurality of mounting bracket assemblies 30 disposed in the height direction of the box body, to improve convenience of mounting the control device 40 in the controller room 21 and convenience of detection, the mounting bracket assembly 30 may include a fixed part and a sliding part. An end of the fixed part may be fastened to the side wall of the controller room 21 facing a side of the battery compartment 10, and the fixed part may be provided with an extension part extending to a side away from the battery compartment 10. A slide rail may be disposed on a side that is of the extension part and that faces away from the power distribution room 22. The sliding part may include a slide groove that matches the slide rail and a bearing part that is connected to the slide groove and that is used to bear the control device 40. During specific arrangement, the extension part may be perpendicular to the side wall of the controller room 21 facing the side of the battery compartment 10, and parallel to a bottom wall of the controller room 21. In a direction of the slide rail that is disposed on the extension part and that moves away from the side wall of the controller room 21 facing the side of the battery compartment 10, a distance between the slide rail and the bottom wall of the controller room 21 gradually increases. In this way, when the sliding part bears the control device 40 to slide close to the side wall of the controller room 21 facing the side of the battery compartment 10, the sliding part can be stabilized in such position, thereby improving working stability of the control device 40.

In addition, the slide rail disposed on the extension part may also extend in the width direction of the box body, and there may be two slide rails. The two slide rails are disposed in parallel, and the slide groove that is disposed on the bearing part and that matches the slide rail is also disposed in the width direction of the box body. In this case, overhaul and maintenance may be performed on the control device 40 at the air inlet 210.

It should be noted that the bearing part and the control device 40 may be integrated. A specific structure of the mounting bracket assembly 30 may also be in other forms, which are not enumerated herein.

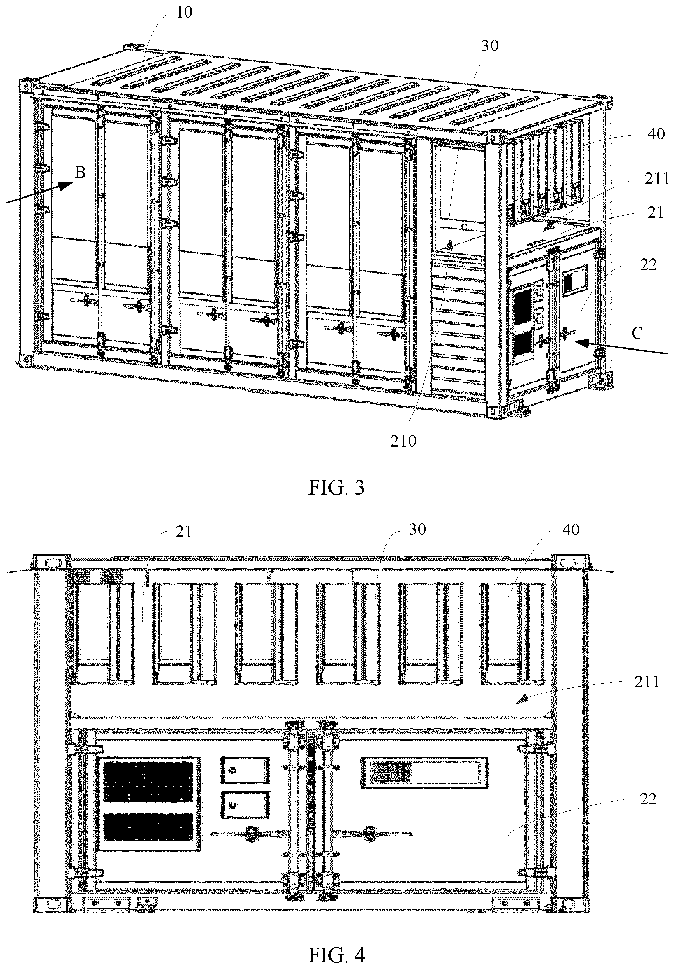

In addition, FIG. 3 is still another three-dimensional diagram of a structure of the energy storage container in FIG. 1, and FIG. 1 is a plan view of a structure observed in a direction B in FIG. 3. It should be understood that, to show the specific structure of the controller room, the structures at the air inlet 210 and the air outlet 211 are different. FIG. 4 is a plan view of a structure observed in a direction C in FIG. 3. As shown in FIG. 3 and FIG. 4, in the function compartment and in the height direction of the box body, when the controller room 21 is provided above the power distribution room 22, the mounting bracket assemblies 30 disposed in the controller room 21 may also be disposed at intervals in the width direction of the box body. In this case, there is a specific gap between a top of each of the mounting bracket assemblies 30 and a top wall of the controller room 21, so that the air passing through the air inlet 210 can enter between two adjacent mounting bracket assemblies 30 through the gap, to take away the heat generated by the control device 40 disposed on the mounting bracket assembly 30, and be discharged from the air outlet 211, so as to ensure that each control device 40 can run stably.

When the plurality of mounting bracket assemblies 30 are arranged at intervals in the width direction of the box body, to improve the convenience of mounting the control device 40 in the controller room 21 and the convenience of detection, the mounting bracket assembly 30 may include the fixed part and the sliding part. The fixed part may be a mounting bracket of which an end is fastened to the side wall of the controller room 21 facing the side of the battery compartment 10, and the mounting bracket extends to the side away from the side wall. An accommodating cavity for accommodating the sliding part is provided on the mounting bracket. The accommodating cavity has an opening on the side away from the side wall. A bottom of the accommodating cavity is provided with the slide rail. An extension direction of the slide rail is the same as the length direction of the box body. The slide rail is perpendicular to the side wall. During specific arrangement, the sliding part is provided with the slide groove that matches the slide rail. An end of the slide groove away from the slide rail may be directly connected to the control device 40. Alternatively, the bearing part for mounting the control device 40 is provided at an end of the slide groove away from the slide rail. In this way, the control device is mounted in the mounting bracket assembly, and the control device 40 can further slide in the length direction of the box body in the mounting bracket. To improve stability of the control device 40 mounted on the mounting bracket assembly 30, in the direction of the slide rail that is disposed on the bottom of the accommodating cavity and that moves away from the side wall of the controller room 21 facing the side of the battery compartment 10, the distance between the slide rail and the bottom wall of the controller room 21 gradually increases. In this way, the control device 40 slides in the length direction of the box body until a rail faces the side wall of the controller room 21 facing the side of the battery compartment 10, to enable the control device 40 to be stabilized in such position.

In addition, during specific arrangement of the mounting bracket, the mounting bracket may be perpendicular to the side wall of the controller room 21 facing the side of the battery compartment 10, and the mounting bracket is disposed in parallel with the side wall in the length direction of the box body. The slide rail is also perpendicular to the side wall of the controller room 21 facing the side of the battery compartment 10, and the mounting bracket is disposed in parallel with the side wall in the length direction of the box body. In this way, the bearing part matching the slide rail and the control device 40 mounted at the bearing part are perpendicular to the side wall of the controller room 21 facing the side of the battery compartment 10, and are disposed in parallel with the side wall in the length direction of the box body, to reduce space occupied by the control device 40 in the accommodating cavity, thereby reducing space occupied by the mounting bracket in the controller room 21.

It should be noted that, when the air inlet 210 is specifically provided in the controller room 21, the controller room 21 may be provided with the air inlet 210 on a side wall in the length direction of the box body, and the air inlet 210 may correspond to the mounting bracket assembly 30 in the controller room 21, to ensure heat dissipation effect of the control device 40 on the mounting bracket assembly 30. In addition, there may also be a plurality of air inlets 210 provided on the side wall of the controller room 21 in the length direction of the box body. The plurality of air inlets 210 may be a plurality of openings provided on the side wall. The air may enter the controller room 21 through the plurality of air inlets 210 to dissipate heat for the control device 40. The air inlet 210 may also be provided on two side walls of the controller room 21 in the length direction of the box body. Two air inlets 210 may be symmetrically provided, and both the two air inlets 210 may correspond to the mounting bracket assembly 30 disposed in the controller room 21. Alternatively, one of the two air inlets 210 corresponds to the mounting bracket assembly 30 disposed in the controller room 21, and the other of the two air inlets 210 is the plurality of openings disposed on the other side wall. In this case, the air outlet 211 provided on the side wall of the controller room 21 in the width direction of the box body may be an opening corresponding to the plurality of mounting bracket assemblies, or may be the plurality of openings disposed on the side wall. The air inlet 210 and the air outlet 211 may be provided in a plurality of forms, which are not enumerated herein.

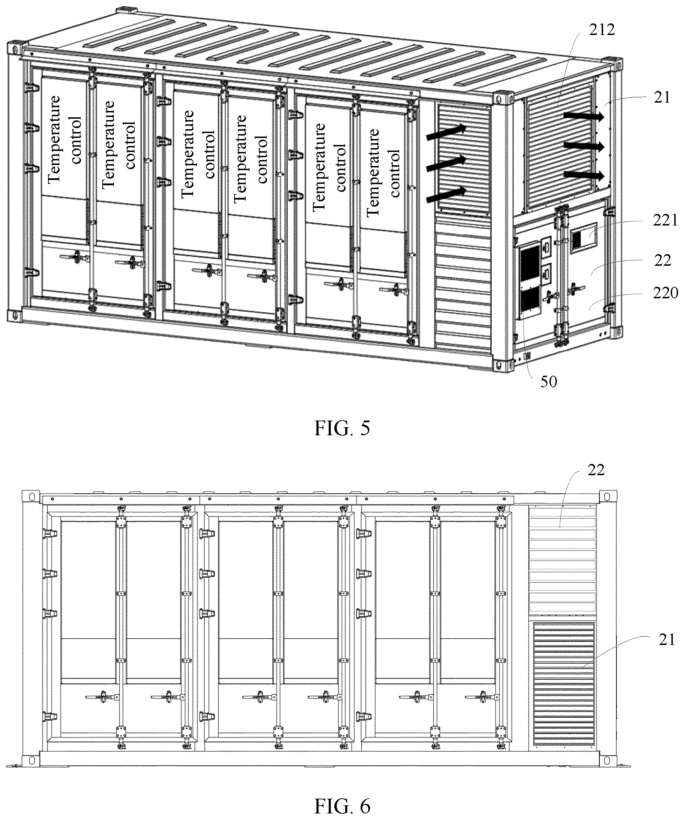

FIG. 5 is a three-dimensional diagram of a structure corresponding to the energy storage container in FIG. 1. As shown in FIG. 5, in the function compartment and in the height direction of the box body, when the controller room 21 is provided above the power distribution room 22, to improve a protection level of the controller room 21, a protective apparatus 212 may be disposed at the air outlet. The protective apparatus 212 may be disposed to reduce impurities entering the controller room 21 from the air outlet, and improve dust-proof, sand-proof, and waterproof capabilities of the controller room 21. In addition, when the protective apparatus 212 is disposed at the air outlet, the protective apparatus 212 may also be disposed at the air inlet. In this case, the protective apparatus 212 is disposed at both the air inlet and the air outlet, and the protection level of the controller room 21 may reach IP21, leading to stronger dust-proof, sand-proof, and waterproof capabilities of the controller room 21. The protective apparatus may be a window blind.

In the foregoing embodiment, as shown in FIG. 5, a side-open door 220 may be disposed on the side wall of the power distribution room 22 in the width direction of the box body, and a heat dissipation apparatus 50 may be disposed on the side-open door 220. The protection level of the power distribution room 22 is IP55 (ingress protection, protection level). A first digit indicates a level of dust-proof and foreign object intrusion prevention of an electric appliance (the foreign object referred to herein, such as a tool and a finger of a person, cannot touch a charged portion of the electric appliance, so as to avoid electric shock). A second digit indicates a degree of moisture-proof and water immersion prevention sealing of the electric appliance. A larger digit indicates a higher protection level. The heat dissipation apparatus 50 disposed in the power distribution room 22 adopts a sealed heat dissipation manner, to ensure the protection level of the power distribution room 22.

Specifically, to facilitate operation and maintenance of the power distribution room 22, there may be two side-open doors 220 disposed on the side wall in the width direction of the box body. The heat dissipation apparatus 30 may be disposed on one of the two side-open doors 220, and an observation window 221 may be disposed on the other of the two side-open doors 220. The observation window 221 may be disposed to facilitate observation of an interior of the power distribution room 22. In addition, when the power distribution room 22 needs to be maintained or an operation is performed in the power distribution room 22, the side-open door 220 provided with the observation window 221 may be opened for entering the power distribution room 22.

In a possible embodiment, the side-open door may be provided on the side wall of the controller room in the width direction of the box body, and the heat dissipation apparatus may be disposed on the side-open door. Because a requirement of the protection level of the controller room is relatively low, the heat dissipation apparatus disposed on the side-open door of the controller room may be non-sealed. Specifically, the heat dissipation apparatus may be a cooling fan.

In a possible embodiment, FIG. 6 is still another schematic diagram of a structure of distribution of the controller room 21 and the power distribution room 22. As shown in FIG. 6, in the height direction of the box body, the controller room 21 may also be provided below the power distribution room 22. In this case, the controller room 21 may be provided with the air outlet on the side wall in the width direction of the box body. The controller room 21 may be provided with the air inlet on the side wall in the length direction of the box body. The air inlet and the air outlet form the heat dissipation channel. The air may enter the controller room 21 through the air inlet. In this way, the heat generated by the control device in the controller room 21 is transferred from the controller room 21 to outside of the controller room 21, so that the control device in the controller room 21 can work stably.

A plurality of groups of the mounting bracket assemblies may be disposed in the controller room 21. Each of the groups of the mounting bracket assemblies may include the plurality of mounting bracket assemblies disposed in the height direction of the box body, and the two adjacent groups of the mounting bracket assemblies are disposed at intervals in the width direction of the box body. Each of the mounting bracket assemblies is configured to mount the control device. During specific installation, the battery pack disposed on the battery rack in the battery compartment 10 may be connected to the control device through the connection line.

When each of the groups of the mounting bracket assemblies includes the plurality of mounting bracket assemblies disposed in the height direction of the box body, to improve the convenience of mounting the control device in the controller room 21 and the convenience of detection, the mounting bracket assembly may include the fixed part and the sliding part. The end of the fixed part may be fastened to the side wall of the controller room 21 facing the side of the battery compartment, and the fixed part may be provided with the extension part extending to the side away from the battery compartment 10. The slide rail may be disposed on the side that is of the extension part and that faces away from the power distribution room 22. The sliding part may include the slide groove that matches the slide rail and the bearing part that is connected to the slide groove and that is used to bear the control device.

In addition, the mounting bracket assemblies disposed in the controller room 21 may also be disposed at intervals in the width direction of the box body. In this case, there is the specific gap between the top of each of the mounting bracket assemblies and the top wall of the controller room 21, so that the air passing through the air inlet can enter between the two adjacent mounting bracket assemblies through the gap, to take away the heat generated by the control device disposed on the mounting bracket assembly, so as to ensure that each control device can run stably.

When the plurality of mounting bracket assemblies are arranged at intervals in the width direction of the box body, to improve the convenience of mounting the control device in the controller room 21 and the convenience of detection, the mounting bracket assembly may include the fixed part and the sliding part. The fixed part may be the mounting bracket of which the end is fastened to the side wall of the controller room 21 facing the side of the battery compartment 10, and the mounting bracket extends to the side away from the side wall. The accommodating cavity for accommodating the sliding part is provided on the mounting bracket. The accommodating cavity has the opening on the side away from the side wall. The bottom of the accommodating cavity is provided with the slide rail. The extension direction of the slide rail is the same as the length direction of the box body. The slide rail is perpendicular to the side wall. The sliding part is provided with the slide groove that matches the slide rail. The end of the slide groove away from the slide rail may be directly connected to the control device, or the bearing part for mounting the control device is provided at the end of the slide groove away from the slide rail. In this way, the control device is mounted in the mounting bracket assembly.

To improve the protection level of the controller room 21, the protective apparatus 212 may be disposed at the air outlet. The protective apparatus 212 may be disposed to reduce the impurities entering the controller room 21 from the air outlet, and improve the dust-proof, sand-proof, and waterproof capabilities of the controller room 21. In addition, when the protective apparatus 212 is disposed at the air outlet, the protective apparatus 212 may also be disposed at the air inlet. In this case, the protective apparatus 212 is disposed at both the air inlet and the air outlet, and the protection level of the controller room 21 may reach IP21, leading to the stronger dust-proof, sand-proof, and waterproof capabilities of the controller room 212.

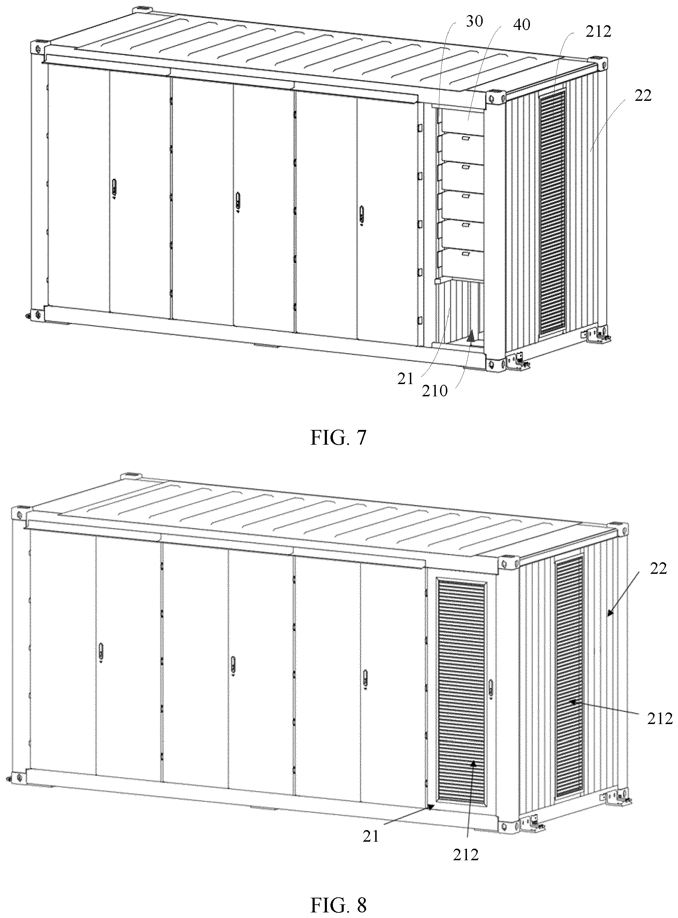

In a possible embodiment, FIG. 7 is still another schematic diagram of the structure of distribution of the controller room 21 and the power distribution room 22, and FIG. 7 is used to show a specific structure in the controller room 21 in this case. FIG. 8 is a schematic diagram of the structure of the energy storage container provided with the protective apparatus at the air inlet 210 in FIG. 7. As shown in FIG. 7 and FIG. 8, in the function compartment and in the width direction of the box body, the power distribution room 22 and the controller room 21 may be disposed in parallel in the width direction of the box body. In this case, the controller room 21 is provided with the air outlet on the side wall in the width direction of the box body. The controller room 21 is provided with the air inlet 210 on the side wall in the length direction of the box body. The heat dissipation channel may be formed between the air inlet 210 and the air outlet. The air may enter the controller room 21 through the air inlet 210. When the air in the controller room 21 passes through the control device 40 in the controller room 21, the heat generated by the control device 40 may be taken away and discharged from the air outlet, so that the control device 40 in the controller room 21 can work stably. In this arrangement form, the plurality of mounting bracket assemblies 30 located in the controller room 21 for mounting the control device 40 may be disposed at intervals in the height direction of the box body. In this way, the air entering from the air inlet 210 may flow through the gap between two control devices 40, to take away the heat generated by the control device 40.

When the power distribution room 22 and the controller room 21 are provided in parallel in the width direction of the box body, and the plurality of mounting bracket assemblies 30 disposed in the controller room 21 may be disposed at intervals in the height direction of the box body, the fixed part included in the mounting bracket assembly 30 may be the slide rail disposed on the two side walls of the controller room 21 in the length direction of the box body, and the slide rail extends in the width direction of the box body. The slide rail may be parallel to the bottom wall of the controller room 21, or when the slide rail extends from the air inlet 210 to the side away from the air inlet, the distance between the slide rail and the bottom wall of the controller room 21 gradually decreases. The sliding part may be the slide groove disposed on two sides of the control device 40, and the slide groove matches the slide rail to enable the control device 40 to slide in the extension direction of the slide rail. Due to an arrangement manner of the slide rail, when the control device 40 is required to be detected or operated, the control device 40 may be directly slid out of the slide rail. After the detection or operation is completed, the control device 40 is directly pushed to an initial position. In addition, when the control device 40 reaches the initial position, the control device 40 may be stably disposed at the position, to ensure that the control device 40 can work stably.

In a specific implementation process, the protective apparatus 212 may be disposed at the air outlet. The protective apparatus 212 may be disposed to reduce the impurities entering the controller room 21 from the air outlet, and improve the dust-proof, sand-proof, and waterproof capabilities of the controller room 21. In addition, when the protective apparatus 212 is disposed at the air outlet, the protective apparatus 212 may also be disposed at the air inlet. In this case, the protective apparatus 212 is disposed at both the air inlet and the air outlet, leading to the stronger dust-proof, sand-proof, and waterproof capabilities of the controller room 21.

The power distribution room 22 provided in parallel with the controller room 21 in the width direction of the box body may be provided with the side-open door on the side wall in the length direction of the box body. In this case, the side-open door is disposed opposite to the air inlet 210 of the controller room 21, and the heat dissipation apparatus may be disposed on the side-open door. The heat dissipation apparatus can dissipate heat for the power distribution room 22. The requirement of the protection level of the power distribution room 22 is high. The heat dissipation apparatus may be configured as an air conditioner, so that when the heat dissipation apparatus cools the power distribution room 22, the power distribution room 22 may remain relatively sealed.

It should be noted that the side-open door on the power distribution room 22 may be provided on the side wall in the width direction of the box body. In this case, an arrangement manner of the controller room 21 provided in parallel with the power distribution room 22 is the same as that of the side-open door of the power distribution room 22 provided on the side wall in the length direction of the box body.

In the foregoing embodiment, to improve safety performance of the box body, a protective layer may be provided between the battery compartment and the function compartment. The protective layer may have a fireproof function and a heat preservation function.

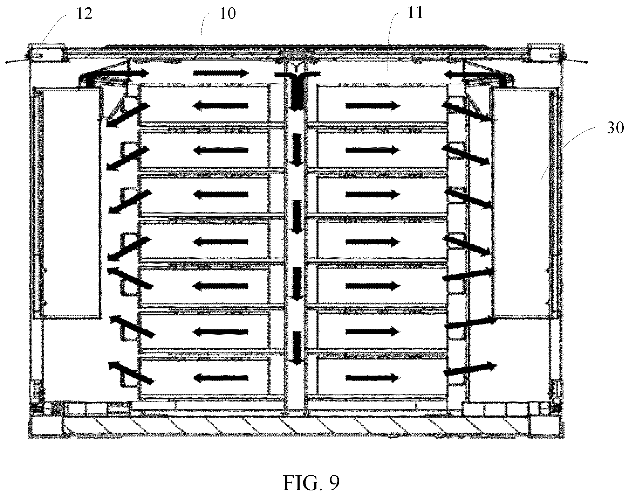

In the foregoing embodiment, FIG. 9 is a schematic diagram of a partial view of the battery compartment according to any one of the foregoing embodiments. As shown in FIG. 9, in the length direction of the box body, the battery compartment 10 may be divided into a plurality of accommodating spaces 11. In the length direction of the box body, two adjacent accommodating spaces 11 are communicated. Each of the accommodating spaces 11 is provided with a side door 12 on the side wall in the length direction of the box body, and the battery rack is disposed in each of the accommodating spaces 11. Specifically, in the width direction of the box body, two battery racks may be disposed in each of the accommodating spaces 11. The slide rail is disposed on a bottom wall of each of the accommodating spaces 11. The slide groove matching the slide rail is disposed on the battery rack, or the slide groove is disposed on the bottom wall of each of the accommodating spaces. The slide rail matching the slide groove is disposed on the battery rack. In addition, the slide rail and the slide groove extend in the width direction of the box body, so that the battery rack is installed in the accommodating space at a position in which the side door 12 is provided in the box body. To improve stability of the battery rack installed in the accommodating space, a locking mechanism may be disposed in the accommodating space. The locking mechanism is configured to fasten a position of the battery rack in the accommodating space. In the height direction of the box body, a plurality of accommodation slots for accommodating the battery packs are disposed on the battery rack, and in the height direction of the box body, two adjacent accommodation slots are distributed at intervals. In this arrangement manner, side doors 12 are provided on two sides of each of the accommodating spaces 11. When any one of the battery racks in the accommodating space 11 is overhauled and maintained, the side door 12 corresponding to the accommodating space 11 may be opened. That is, the battery rack and the battery pack in the accommodating space 11 may be overhauled and maintained. In this way, there is no need to provide a channel for overhaul and maintenance inside the battery compartment 10. Thus, as compared with an energy storage container having a maintenance channel, this effectively improves the space utilization of the energy storage container and increases energy storage density.

It should be noted that, to ensure that the battery compartment 10 can run stably, heat dissipation further needs to be performed on the battery compartment 10. Specifically, in each of the accommodating spaces 11, the side doors 12 provided on the two sides in the length direction of the box body may be provided opposite to each other. In addition, heat dissipation apparatuses 50 may be disposed on every two side doors 12 that are provided opposite to each other. In this way, cold air generated by the two heat dissipation apparatuses 50 may enter the gap on the battery rack, to dissipate heat for the battery pack disposed on the battery rack. In addition, because the battery compartment 10 has the relatively high requirement of the protection level, and sealing performance of the battery compartment 10 needs to be ensured, the heat dissipation apparatus 30 may be disposed as a sealed heat dissipation apparatus such as the air conditioner.

## Claims

1. An energy storage container, comprising:
a box body, wherein the box body comprises a function compartment (20) and a battery compartment (10), the function compartment (20) and the battery compartment are sequentially distributed in a length direction of the box body, and the function compartment (20) comprises a power distribution room (22), and a controller room (21); the energy storage container being **characterized in that**
the controller room (21) is located above the power distribution room (22), the controller room (21) is provided with an air outlet (211) on a side wall in a width direction of the box body, and the controller room (21) is provided with an air inlet (210) on a side wall in the length direction of the box body, the air inlet (210) and the air outlet (211) form a heat dissipation channel; and
the power distribution room (22) is provided with a side-open door (220) on the side wall in the width direction of the box body, and a heat dissipation apparatus (50) is disposed on the side-open door (220).

2. The energy storage container according to claim 1, wherein a protective apparatus (212) is provided at the air inlet (210) and/or the air outlet (211).

3. The energy storage container according to claim 1, wherein the controller room (21) comprises a plurality of groups of mounting bracket assemblies (30), each of the groups of the mounting bracket assemblies (30) comprises a plurality of mounting bracket assemblies (30) disposed in a height direction of the box body, and two adjacent groups of the mounting bracket assemblies (30) are disposed at intervals in the width direction of the box body.

4. The energy storage container according to claim 1, wherein the controller room (21) comprises a plurality of mounting bracket assemblies (30), and the plurality of mounting bracket assemblies (30) are disposed at intervals in the width direction of the box body.

5. The energy storage container according to any one of claims 1 to 4, wherein the box body further comprises a protective layer, and the protective layer is provided between the battery compartment (10), and the function compartment (20).

6. The energy storage container according to claim 1, wherein the mounting bracket assembly (30) comprises a fixed part fastened to the side wall of the controller room (21) and a sliding part cooperating with the fixed part.

7. The energy storage container according to any one of claims 1 to 6, wherein the battery compartment (10), is provided with side doors (12) respectively on side walls in the length direction of the box body, and the heat dissipation apparatus (50) is provided on the side door (12).

8. The energy storage container according to claim 7, wherein an accommodating space (11) is formed between each two opposite side doors (12), a battery rack is disposed in the accommodating space (11), one of a bottom wall of the battery rack and a bottom wall of the accommodating space (11) is provided with a slide rail, the other of the bottom wall of the battery rack and the bottom wall of the accommodating space (11) is provided with a slide groove matching the slide rail, and the slide rail and the slide groove extend in the width direction of the box body.

9. The energy storage container according to claim 8, wherein a limiting mechanism is provided in each accommodating space (11), and the limiting mechanism is configured to limit a position of each battery rack in the accommodating space (11).

## Patentansprüche

1. Energiespeicherbehälter, umfassend:
einen Kastenkörper, wobei der Kastenkörper ein Funktionsfach (20) und ein Batteriefach (10) umfasst, wobei das Funktionsfach (20) und das Batteriefach nacheinander in einer Längsrichtung des Kastenkörpers verteilt sind, und das Funktionsfach (20) einen Stromverteilungsraum (22) und einen Steuerungsraum (21) umfasst; wobei der Energiespeicherbehälter **dadurch gekennzeichnet ist, dass**
der Steuerungsraum (21) sich über dem Stromverteilungsraum (22) befindet, der Steuerungsraum (21) mit einem Luftauslass (211) an einer Seitenwand in einer Breitenrichtung des Kastenkörpers bereitgestellt wird, und der Steuerungsraum (21) mit einem Lufteinlass (210) an einer Seitenwand in der Längsrichtung des Kastenkörpers bereitgestellt wird, wobei der Lufteinlass (210) und der Luftauslass (211) einen Wärmeableitungskanal bilden; und
der Stromverteilungsraum (22) mit einer seitlich offenen Tür (220) an der Seitenwand in der Breitenrichtung des Kastenkörpers bereitgestellt wird und ein Wärmeableitungsgerät (50) an der seitlich offenen Tür (220) angeordnet ist.

2. Energiespeicherbehälter gemäß Anspruch 1, wobei ein Schutzgerät (212) an dem Lufteinlass (210) und/oder dem Luftauslass (211) bereitgestellt wird.

3. Energiespeicherbehälter gemäß Anspruch 1, wobei der Steuerungsraum (21) eine Vielzahl von Gruppen von Montagehalterungsbaugruppen (30) umfasst, wobei jede der Gruppen der Montagehalterungsbaugruppen (30) eine Vielzahl von Montagehalterungsbaugruppen (30) umfasst, die in einer Höhenrichtung des Kastenkörpers angeordnet sind, und zwei benachbarte Gruppen der Montagehalterungsbaugruppen (30) in Intervallen in der Breitenrichtung des Kastenkörpers angeordnet sind.

4. Energiespeicherbehälter gemäß Anspruch 1, wobei der Steuerungsraum (21) eine Vielzahl von Montagehalterungsbaugruppen (30) umfasst und die Vielzahl von Montagehalterungsbaugruppen (30) in Intervallen in der Breitenrichtung des Kastenkörpers angeordnet ist.

5. Energiespeicherbehälter gemäß einem der Ansprüche 1 bis 4, wobei der Kastenkörper ferner eine Schutzschicht umfasst und die Schutzschicht zwischen dem Batteriefach (10) und dem Funktionsfach (20) bereitgestellt wird.

6. Energiespeicherbehälter gemäß Anspruch 1, wobei die Montagehalterungsbaugruppe (30) einen an der Seitenwand des Steuerungsraums (21) befestigten feststehenden Teil und einen mit dem feststehenden Teil zusammenwirkenden gleitenden Teil umfasst.

7. Energiespeicherbehälter gemäß einem der Ansprüche 1 bis 6, wobei das Batteriefach (10) mit Seitentüren (12) jeweils an Seitenwänden in der Längsrichtung des Kastenkörpers bereitgestellt wird und das Wärmeableitungsgerät (50) an der Seitentür (12) bereitgestellt wird.

8. Energiespeicherbehälter gemäß Anspruch 7, wobei ein Aufnahmeraum (11) zwischen jeweils zwei gegenüberliegenden Seitentüren (12) gebildet ist, ein Batteriegestell in dem Aufnahmeraum (11) angeordnet ist, eine von einer Bodenwand des Batteriegestells und einer Bodenwand des Aufnahmeraums (11) mit einer Gleitschiene bereitgestellt wird, die andere von der Bodenwand des Batteriegestells und der Bodenwand des Aufnahmeraums (11) mit einer Gleitnut bereitgestellt wird, die zu der Gleitschiene passt, und die Gleitschiene und die Gleitnut sich in der Breitenrichtung des Kastenkörpers erstrecken.

9. Energiespeicherbehälter gemäß Anspruch 8, wobei ein Begrenzungsmechanismus in jedem Aufnahmeraum (11) bereitgestellt wird und der Begrenzungsmechanismus dazu konfiguriert ist, eine Position jedes Batteriegestells in dem Aufnahmeraum (11) zu begrenzen.

## Revendications

1. Récipient de stockage d'énergie, comprenant :
un corps de boîte, dans lequel le corps de boîte comprend un compartiment de fonction (20) et un compartiment de batterie (10), le compartiment de fonction (20) et le compartiment de batterie sont répartis séquentiellement dans une direction de longueur du corps de boîte, et le compartiment de fonction (20) comprend une salle de distribution de puissance (22) et une salle de dispositif de commande (21) ; le récipient de stockage d'énergie étant **caractérisé en ce que**
la salle de dispositif de commande (21) est située au-dessus de la salle de distribution de puissance (22), la salle de dispositif de commande (21) est dotée d'une sortie d'air (211) sur une paroi latérale dans une direction de largeur du corps de boîte, et la salle de dispositif de commande (21) est dotée d'une entrée d'air (210) sur une paroi latérale dans la direction de la longueur du corps de boîte, l'entrée d'air (210) et la sortie d'air (211) forment un canal de dissipation de chaleur ; et
la salle de distribution de puissance (22) est dotée d'une porte latérale ouverte (220) sur la paroi latérale dans la direction de largeur du corps de la boîte, et un appareil de dissipation de chaleur (50) est disposé sur la porte latérale ouverte (220).

2. Récipient de stockage d'énergie selon la revendication 1, dans lequel un appareil de protection (212) est prévu à l'entrée d'air (210) et/ou à la sortie d'air (211).

3. Récipient de stockage d'énergie selon la revendication 1, dans lequel la salle de dispositif de commande (21) comprend une pluralité de groupes d'ensembles supports de montage (30), chacun des groupes des ensembles supports de montage (30) comprend une pluralité d'ensembles supports de montage (30) disposés dans une direction de hauteur du corps de boîte, et deux groupes adjacents des ensembles supports de montage (30) sont disposés à des intervalles dans la direction de largeur du corps de boîte.

4. Récipient de stockage d'énergie selon la revendication 1, dans lequel la salle de dispositif de commande (21) comprend une pluralité d'ensembles supports de montage (30), et la pluralité d'ensembles supports de montage (30) sont disposés à des intervalles dans la direction de largeur du corps de boîte.

5. Récipient de stockage d'énergie selon l'une quelconque des revendications 1 à 4, dans lequel le corps de boîte comprend également une couche protectrice, et la couche protectrice est prévue entre le compartiment de batterie (10) et le compartiment de fonction (20).

6. Récipient de stockage d'énergie selon la revendication 1, dans lequel l'ensemble support de montage (30) comprend une partie fixe fixée à la paroi latérale de la salle de dispositif de commande (21) et une partie coulissante coopérant avec la partie fixe.

7. Récipient de stockage d'énergie selon l'une quelconque des revendications 1 à 6, dans lequel le compartiment de batterie (10) est doté de portes latérales (12) respectivement sur des parois latérales dans la direction de longueur du corps de boîte, et l'appareil de dissipation de chaleur (50) est prévu sur la porte latérale (12).

8. Récipient de stockage d'énergie selon la revendication 7, dans lequel un espace de logement (11) est formé entre chacune des deux portes latérales opposées (12), un bâti de batterie est disposé dans l'espace de logement (11), l'une d'une paroi inférieure du bâti de batterie et d'une paroi inférieure de l'espace de logement (11) est dotée d'un rail de coulissement, l'autre de la paroi inférieure du bâti de batterie et de la paroi inférieure de l'espace de logement (11) est dotée d'une rainure de coulissement correspondant au rail de coulissement, et le rail de coulissement et la rainure de coulissement se prolongent dans la direction de largeur du corps de boîte.

9. Récipient de stockage d'énergie selon la revendication 8, dans lequel un mécanisme de limitation est prévu dans chaque espace de logement (11), et le mécanisme de limitation est configuré pour limiter une position de chaque bâti de batterie dans l'espace de logement (11).
